(19) Europäisches Patentamt

European Patent Office

Office européen des brevets

(11) **EP 1 131 386 B1**

(12) **EUROPÄISCHE PATENTSCHRIFT**

| | |
|---|---|
| (45) Veröffentlichungstag und Bekanntmachung des Hinweises auf die Patenterteilung: **12.01.2005 Patentblatt 2005/02** | (51) Int Cl.⁷: **C09J 5/00**, E04F 13/08, B29C 44/12 |
| (21) Anmeldenummer: **00926936.6** | (86) Internationale Anmeldenummer: **PCT/EP2000/003386** |
| (22) Anmeldetag: **14.04.2000** | (87) Internationale Veröffentlichungsnummer: **WO 2000/064993 (02.11.2000 Gazette 2000/44)** |

(54) **STEINVERBUNDPLATTEN**

COMPOSITE STONE PANELS

PANNEAUX COMPOSITES EN PIERRE

| | |
|---|---|
| (84) Benannte Vertragsstaaten: **AT BE CH CY DE DK ES FI FR GB GR IE IT LI LU MC NL PT SE** | (73) Patentinhaber: **Henkel Kommanditgesellschaft auf Aktien 40589 Düsseldorf (DE)** |
| (30) Priorität: **23.04.1999 DE 19918459** | (72) Erfinder: **THIELE, Lothar D-40764 Langenfeld (DE)** |
| (43) Veröffentlichungstag der Anmeldung: **12.09.2001 Patentblatt 2001/37** | (56) Entgegenhaltungen: **DE-A- 19 805 294     US-A- 4 432 177** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Herstellung von Verbundkörpem aus mineralischen Formkörpern und geschäumten Polyurethanschichten sowie die nach diesem Verfahren hergestellten Verbundkörper.

Raumausstattungsgegenstände wie z. B. Küchenarbeits- oder Verkleidungsplatten, Fensterbänke, Fassaden-, Boden- oder Wandplatten, Duschtassen sowie Ausgüsse oder Spülen im Küchen- oder Badbereich bestehen häufig aus Natursteinplatten oder Natursteinformkörpem wie Marmor, Granit, Basalt oder Sandstein. Zur Erzielung einer ausreichenden Tragfähigkeit und Biegefestigkeit müssen diese mineralischen Formkörper oder Platten für die vorgenannten Einsatzzwecke erhebliche Schichtstärken haben. Daher sind derartige Raumausstattungsgegenstände oder auch plattenförmige Halbzeuge hierfür teuer und weisen ein sehr hohes Gewicht auf. Beides begrenzt die Einsetzbarkeit derartiger kompakter Natursteinprodukte.

Die DE-C-197 26 502 beschreibt ein Verfahren zur Herstellung von Platten oder Formteilen aus Polyisocyanaten und Polyolen. die zu einem Polyurethan-Schaumkunststoff reagieren, wobei unter Zumischung von Füllmitteln, Farbstoffen und dgl. ein Steinimitat entsteht. Es wird weiterhin vorgeschlagen, daß in einem in-mold-Verfahren in einer geheizten Form das aufgeschäumte Polyurethangemisch mit einer Natursteinplatte, beispielsweise aus Granit oder Marmor oder aus Metall oder Holzwerkstoff verbunden wird. Dazu muß die Form beheizt werden, wobei eine Temperatur zwischen 55 und 80°C eingehalten werden muß und das Gemisch durch das Aufschäumen in der beheizten Form einem Druck zwischen 7 MPa und 14 MPa ausgesetzt werden muß, um eine Dichte zwischen 0,4 g/cm$^3$ und 2,0 g/cm$^3$ zu erreichen. Zu den Schaumstoffkomponenten wird nur ausgesagt, daß ein Polyisocyanat und ein Polyol eingesetzt werden, nähere Angaben sind dieser Schrift nicht zu entnehmen.

Angesichts dieses Standes der Technik haben sich die Erfinder die Aufgabe gestellt, ein möglichst einfaches und effizientes Verfahren zum Herstellen von Verbundkörpern aus mineralischen Formkörpern und geschäumten Polyurethanschichten bereitzustellen.

Die erfindungsgemäße Lösung der Aufgabe ist den Ansprüchen zu entnehmen. Das erfindungsgemäße Verfahren besteht im wesentlichen darin, daß der mineralische Formkörper in einer geschlossenen Form mit einer schäumfähigen Polyurethanzusammensetzung beschichtet wird, deren Bindemittel aus Polyisocyanaten, Polyolen, Katalysatoren, 0,1 bis 5 gew.% Wasser (bezogen auf das Bindemittel), sowie gegebenenfalls Carbonsäuren und Netz- und Dispergiermitteln besteht wobei die Form nicht vorgeheizt wird und die Zusammensetzung nur dem beim Schaumprozeß des Polyurethangemisches entstehenden Eigendruck ausgesetzt wird.

In einer weiteren Ausbildung des Verfahrens wird der geschäumte Polyurethankörper separat hergestellt und mit Hilfe eines Klebstoffes und gegebenenfalls einer Verstärkungsmatte auf dem mineralischen Formkörper oder Halbzeug aufgeklebt.

Das erfindungsgemäß einsetzbare Polyurethansystem besteht dabei aus

a) Polyisocyanaten,
b) Polyolen
c) Katalysatoren
d) Netz- und Dispergiermittel
e) Schaumstabilisatoren
f) Wasser, das gegebenenfalls durch Carbonsäuren ganz oder teilweise ersetzt werden kann
g) sowie vorzugsweise Füllstoffe.

Die im Rahmen des erfindungsgemäßen Verfahrens verwendeten Poiyurethan-Bindemittel bestehen im wesentlichen aus einem Reaktionsprodukt mindestens eines Polyols mit mindestens einem Polyisocyanat, wobei zur Porenbildung des Schaums als Treibmittel gegebenenfalls Wasser und/oder eine Carbonsäure mitverwendet werden kann. Anstelle von Polyolen und Carbonsäuren können auch Hydroxycarbonsäuren oder Aminocarbonsäuren eingesetzt werden, Polyole können ganz oder teilweise durch Polyamine ersetzt werden.

Die Polyisocyanate sind mehrfunktionell, vorzugsweise enthalten die geeigneten mehrfunktionellen Isocyanate im Mittel 2 bis höchstens 5, vorzugsweise bis 4 und insbesondere 2 oder 3 Isocyanat-Gruppen pro Molekül. Die zu verwendenden Polyisocyanate können aromatische, cycloaliphatische oder aliphatische Isocyanate sein.

Beispiele für geeignete aromatische Polyisocyanate sind: Alle Isomeren des Toluylendiisocyanats (TDI) entweder in isomerenreiner Form oder als Mischung mehrerer Isomerer, Naphthalin-1,5-diisocyanat, Diphenylmethan-4,4'-diisocyanat (MDI), Diphenylmethan-2,4'-diisocyanat sowie Mischungen des 4,4'-Diphenylmethandiisocyanats mit dem 2,4'-Isomeren oder deren Mischungen mit höherfunktionellen Oligomeren (sogenanntes Roh-MDI), Xylylen-diisocyanat (XDI), 4,4'-Diphenyl-dimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat. Beispiele für geeignete cycloaliphatische Polyisocyanate sind die Hydrierungsprodukte der vorgenannten aromatischen Diisocyanate wie z.B. das 4,4'-Dicyclohexylmethandiisocyanat (H$_{12}$MDI), 1-Isocyanatomethyl-3-isocyanato-1,5,5-trimethyl-cyclohexan (IsophoronDiisocyanat, IPDI), Cyclohexan-1,4-diisocyanat, hydriertes Xylylen-diisocyanat (H$_6$XDI), 1-Methyl-2,4-diisocyanato-cyclohexan, m- oder p-Tetramethylxylendiisocyanat (m-TMXDI, p-TMXDI) und Dimerfettsäure-diisocyanat. Beispiele für aliphatische Polyisocyanate sind Tetramethoxybutan-1,4-diisocyanat, Butan-1,4-diisocyanat, Hexan-1,6-diisocyanat (HDI), 1,6-Diisocyanato-2,2,4-trimethylhexan, 1,6-Diisocyanato-2,4,4-trimethylhexan sowie 1,12-Dodecandiisocyanat (C$_{12}$DI).

Im allgemeinen werden aromatische Isocyanate bevorzugt, vorzugsweise das Diphenylmethandiisocyanat, entweder in Form der reinen Isomeren, als Isomerengemische der 2,4'-/4,4'-Isomeren oder auch das mit Carbodiimid verflüssigte MDI, das z.B. unter dem Handelsnamen Isonate 143 L bekannt ist, sowie das sogenannte "Roh-MDI", d. h. eine Isomeren/Oligomerenmischung des MDI, wie sie z.B. unter dem Handelsnamen PAPI bzw. Desmodur VK im Handel erhältlich sind. Weiterhin können sogenannte "quasi-Prepolymere", d.h. Umsetzungsprodukte des MDI bzw. des TDI mit niedermolekularen Diolen, wie z.B. Ethylenglykol, Diethylenglykol, Propylenglykol, Dipropylenglykol oder Triethylenglykol verwendet werden. Diese quasi Prepolymeren stellen bekanntlich eine Mischung der vorgenannten Umsetzungsprodukte mit monomeren Diisocyanaten dar. Erstaunlicherweise vermögen auch aliphatische und cycloaliphatische Isocyanate schon bei Raumtemperatur schnell und vollständig zu den erfindungsgemäßen Schaumstoffen zu reagieren. Neben den vorgenannten aliphatischen und cycloaliphatischen Isocyanaten sind auch deren Isocyanuratisierungsprodukte bzw. Biuretisierungsprodukte, insbesondere die des HDI bzw. IPDI einzusetzen.

Prinzipiell sind alle Polyole, die bereits zur Polyurethanherstellung bekannt sind, auch für die vorliegende Erfindung geeignet. In Betracht kommen insbesondere die an sich bekannten Polyhydroxy-Polyether des Molekulargewichtsbereiches von 60 bis 10.000, vorzugsweise 70 bis 6.000, mit 2 bis 10 Hydroxylgruppen pro Molekül. Derartige Polyhydroxypolyether werden in an sich bekannter Weise durch Alkoxylierung von geeigneten Startermolekülen erhalten, z. B. von Wasser, Propylenglykol, Glycerin, Trimethylolpropan, Sorbit, Rohrzucker usw. Geeignete Alkoxylierungsmittel sind insbesondere Propylenoxid und eventuell auch Ethylenoxid.

Vorzugsweise eignen sich die flüssigen Polyhydroxyverbindungen mit zwei bzw. drei Hydroxylgruppen pro Molekül, wie z.B. di- und/oder trifunktionelle Polypropylenglykole im Molekulargewichtsbereich von 200 bis 6000, vorzugsweise im Bereich von 400 bis 3000. Es können auch statistische und/oder Blockcopolymere des Ethylenoxids und Propylenoxids eingesetzt werden. Eine weitere Gruppe von vorzugsweise einzusetzenden Polyethern sind die Polytetramethylenglykole, die z.B. durch die saure Polymerisation von Tetrahydrofuran hergestellt werden, dabei liegt der Molekulargewichtsbereich der Polytetramethylenglykole zwischen 200 und 6000, vorzugsweise im Bereich von 400 bis 4000.

Weiterhin sind als Polyole die flüssigen Polyester geeignet, die durch Kondensation von Di- bzw. Tricarbonsäuren, wie z.B. Adipinsäure, Sebacinsäure, Glutarsäure, Azelainsäure, Hexahydrophthalsäure oder Phthalsäure mit niedermolekularen Diolen bzw. Triolen wie z.B. Ethylenglykol, Propylenglykol, Diethylenglykol, Triethylenglykol, Dipropylenglykol, 1,4-Butandiol, 1,6-Hexandiol, 1,10-Decandiol, Glyzerin oder Trimethylolpropan hergestellt werden können.

Eine weitere Gruppe der erfindungsgemäß einzusetzenden Polyole sind die Polyester auf der Basis von ε-Caprolacton, auch "Polycaprolactone" genannt.

Es können aber auch Polyesterpolyole oleochemischer Herkunft verwendet werden. Derartige Polyesterpolyole können beispielsweise durch vollständige Ringöffnung von epoxidierten Triglyzeriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglyzerid-Derivate zu Alkylesterpolyolen mit 1 bis 12 C-Atomen im Alkylrest hergestellt werden. Weitere geeignete Polyole sind Polycarbonatpolyole und Dimerdiole (Fa. Henkel) sowie Rizinusöl und dessen Derivate. Auch die Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden.

Insbesondere ist die Polyol-Komponente eine Diol/Triol-Mischung aus Polyether- und Polyesterpolyolen.

Die erfindungsgemäß einzusetzenden Carbonsäuren reagieren mit den Isocyanaten in Gegenwart von Katalysatoren unter Abspaltung von Kohlendioxid zu Amiden, sie haben also die Doppelfunktion an dem Aufbau des Polymergerüstes beteiligt zu sein und gleichzeitig durch die Abspaltung des Kohlendioxids als Treibmittel zu wirken.

Unter "Carbonsäuren" werden Säuren verstanden, die eine oder mehrere - vorzugsweise bis zu drei - Carboxyl-Gruppen (-COOH) und mindestens 2, vorzugsweise 5 bis 400 C-Atome enthalten. Die Carboxyl-Gruppen können mit gesättigten oder ungesättigten, linearen oder verzweigten Alkyl- oder Cycloalkyl-Resten oder mit aromatischen Resten verbunden sein. Sie können weitere Gruppen wie Ether-, Ester-, Halogen-, Amid-, Amino-, Hydroxy- und Harnstoffgruppen enthalten. Bevorzugt werden jedoch Carbonsäuren, die als Flüssigkeiten bei Raumtemperatur leicht einarbeitbar sind, wie native Fettsäuren oder Fettsäuregemische, COOH-terminierte Polyester, Polyether oder Polyamide, Dimerfettsäuren und Trimerfettsäuren. Konkrete Beispiele für die Carbonsäuren sind: Essigsäure, Valerian-, Capron-, Capryl-, Caprin-, Laurin-, Myristin-, Palmitin-, Stearin-, Isostearin-, Isopalmitin-, Arachin-, Behen-, Cerotin- und Melissin-Säuren sowie die ein- oder mehrfach ungesättigte Säuren Palmitolein-, Öl-, Elaidin-, Petroselin-, Eruca-, Linol-, Linolen- und Gadoleinsäure. Außerdem seien auch noch genannt:, Adipinsäure, Sebacinsäure, Isophthalsäure, Terephthalsäure, Trimellithsäure, Phthalsäure, Hexahydrophthalsäure, Tetrachlorphthalsäure, Oxalsäure, Mukonsäure, Bemsteinsäure, Fumarsäure, Ricinolsäure, 12-Hydroxy-stearinsäure, Zitronensäure, Weinsäure, di- oder trimerisierte ungesättigte Fettsäuren, gegebenenfalls in Mischung mit monomeren ungesättigten Fettsäuren und gegebenenfalls Partialester dieser Verbindungen. Ebenso können auch Ester von Polycarbonsäuren oder Carbonsäuregemischen, die sowohl COOH- als auch OH-Gruppen besitzen, eingesetzt werden wie Ester von TMP [$C_2H_5$-$C(CH_2OH)_3$], Glycerin, Pentaerythrit, Sorbit, Glykol bzw. deren Alkoxylate mit Adipinsäure, Sebacinsäure, Zitronensäure, Weinsäure oder gepfropfte oder partiell veresterte Kohlenhydrate (Zucker, Stärke, Cellulose) und Ringöffnungsprodukte von Epoxiden mit Polycarbonsäuren.

Zu den "Carbonsäuren" zählen neben den Aminocarbonsäuren bevorzugt "Hydroxycarbonsäuren". Unter "Hydroxycarbonsäuren" sind Monohydroxymonocarbonsäuren, Monohydroxypolycarbonsäuren, Polyhydroxymonocarbonsäuren und Polyhydroxypolycarbonsäuren einschließlich der entsprechenden Hydroxyalkoxycarbonsäuren mit 2 bis 600, vorzugsweise mit 8 bis 400 und insbesondere mit 14 bis 120 C-Atomen zu verstehen, die 1 bis 9, vorzugsweise 2 bis 3, Hydroxylgruppen bzw. Carboxylgruppen an einem H-C-Rest, insbesondere an einem aliphatischen Rest enthalten. Die Polyhydroxymonocarbonsäuren und die Polyhydroxypolycarbonsäuren einschließlich der entsprechenden Hydroxyalkoxycarbonsäuren werden zu den Polyhydroxyfettsäuren zusammengefaßt. Die vorzugsweise verwendeten Dihydroxyfettsäuren sowie ihre Herstellung werden in der DE-OS 33 18 596 und der EP 237 959 beschrieben, auf die ausdrücklich Bezug genommen wird.

Die erfindungsgemäß verwendeten Polyhydroxyfettsäuren leiten sich bevorzugt von natürlich vorkommenden Fettsäuren ab. Sie weisen daher in der Regel eine gerade Anzahl an Kohlenstoffatomen in der Hauptkette auf und sind nicht verzweigt. Besonders geeignet sind solche mit einer Kettenlänge von 8 bis 100, insbesondere von 14 bis 22 C-Atomen. Für technische Verwendungen werden natürliche Fettsäuren meistens als technische Mischungen eingesetzt. Diese Mischungen enthalten vorzugsweise einen Teil an Ölsäure. Sie können darüber hinaus weitere gesättigte, einfach ungesättigte und mehrfach ungesättigte Fettsäuren enthalten. Auch bei der Herstellung der erfindungsgemäß verwendbaren Polyhydroxyfettsäuren bzw. Polyhydroxyalkoxyfettsäuren können prinzipiell Mischungen unterschiedlicher Kettenlänge eingesetzt werden, die auch noch gesättigte Anteile oder aber Polyhydroxyalkoxycarbonsäuren mit Doppelbindungen enthalten können. Geeignet sind hier also nicht nur die reinen Polyhydroxyfettsäuren, sondern auch Mischprodukte, erhalten aus tierischen Fetten oder pflanzlichen Ölen, die nach Aufbereitung (Esterspaltung, Reinigungsstufen) Gehalte an einfach ungesättigten Fettsäuren > 40 %, bevorzugt > 60 %, aufweisen. Beispiele hierfür sind käuflich erhältliche, natürliche Rohstoffe wie z.B. Rindertalg mit einer Kettenverteilung von 67 % Ölsäure, 2 % Stearinsäure, 1 % Heptadecansäure, 10 % gesättigte Säuren der Kettenlänge $C_{12}$ bis $C_{16}$, 12 % Linolsäure und 2 % gesättigte Säuren >$C_{18}$ Kohlenstoffatomen oder z.B. das Öl der neuen Sonnenblume (NSb) mit einer Zusammensetzung von ca. 80 % Ölsäure, 5 % Stearinsäure, 8 % Linolsäure und ca. 7 % Palmitinsäure. Diese Produkte können nach Ringöffnung kurz destilliert werden, um die ungesättigten Fettsäureesteranteile zu reduzieren. Weiterführende Reinigungsschritte (z.B. länger anhaltende Destillation) sind ebenfalls möglich.

Bevorzugt leiten sich die erfindungsgemäß verwendeten Polyhydroxyfettsäuren von einfach ungesättigten Fettsäuren ab, z.B. von 4,5-Tetradecensäure, 9,10-Tetradecensäure, 9,10-Pentadecensäure, 9,10-Hexadecensäure, 9,10-Heptadecensäure, 6,7-Octadecensäure, 9,10-Octadecensäure, 11,12-Octadecensäure, 11,12-Eicosensäure, 11,12-Docosensäure, 13,14-Docosensäure, 15,16-Tetracosensäure und 9,10-Ximensäure. Davon bevorzugt ist die Ölsäure (9,10-Octadecensäure). Sowohl cis- als auch trans-Isomere von allen genannten Fettsäuren sind geeignet.

Geeignet sind auch Polyhydroxyfettsäuren, die sich von weniger häufig vorkommenden ungesättigten Fettsäuren herleiten, wie Decyl-12-ensäure, Stilingsäure, Dodecyl-9-ensäure, Rizinolsäure, Petroselinsäure, Vaccensäure, Eläostearinsäure, Punicinsäure, Licansäure, Parinarsäure, Gadoleinsäure, Arachidonsäure, 5-Eicosensäure, 5-Docosensäure, Cetoleinsäure, 5,13-Docosadiensäure und/oder Selacholeinsäure.

Des weiteren sind geeignet Polyhydroxyfettsäuren, die aus Isomerisierungsprodukten natürlicher ungesättigter Fettsäuren hergestellt worden sind. Die so hergestellten Polyhydroxyfettsäuren unterscheiden sich nur durch die Lage der Hydroxy- bzw. der Hydroxyalkoxygruppen im Molekül. Sie liegen im allgemeinen als Gemische vor. Natürlich vorkommende Fettsäuren sind im Sinne natürlicher Rohstoffe bei der vorliegenden Erfindung als Ausgangskomponente zwar bevorzugt, was aber nicht heißt, daß nicht auch synthetisch hergestellte Carbonsäuren mit entsprechenden C-Zahlen geeignet sind.

Ein Hydroxyalkoxyrest der Polyhydroxyfettsäuren leitet sich von dem Polyol ab, das zur Ringöffnung des epoxidierten Fettsäurederivats verwendet worden ist. Bevorzugt werden Polyhydroxyfettsäuren, deren Hydroxyalkoxygruppe sich von vorzugsweise primären difunktionellen Alkoholen mit bis zu 24, insbesondere bis zu 12 C-Atomen ableitet. Geeignete Diole sind Propandiol, Butandiol, Pentandiol und Hexandiol, Dodecandiol, vorzugsweise 1,2-Ethandiol, 1,4-Butandiol, 1,6-Hexandiol, Polypropylenglykol, Polybutandiol und/oder Polyethylenglykol mit einem Polymerisationsgrad von 2 bis 40. Des weiteren sind als Diol-Verbindungen Polypropylenglykol und/oder Polytetrahydrofurandiol sowie deren Mischpolymerisationsprodukte besonders geeignet. Dies gilt insbesondere dann, wenn diese Verbindungen jeweils einen Polymerisationsgrad von etwa 2 bis 20 Einheiten aufweisen. Zur Ringöffnung können aber auch Triole oder noch höherwertige Alkohole eingesetzt werden, z.B. Glycerin und Trimethylolpropan sowie deren Addukte von Ethylenoxid und/oder Propylenoxid mit Molekulargewichten bis zu 1 500. Es werden dann Polyhydroxyfettsäuren erhalten mit mehr als 2 Hydroxylgruppen pro Molekül.

Zur Ringöffnung kann anstelle eines Polyols als hydroxylgruppenhaltige Verbindung auch eine Hydroxycarbonsäure eingesetzt werden, z.B. Zitronensäure, Rizinolsäure, 12-Hydroxystearinsäure, Milchsäure. Es entstehen dann Ester-Gruppen anstelle von Ether-Gruppen. Des weiteren können auch Amine, Hydroxylgruppen-tragende Amine bzw. Amincarbonsäuren zur Ringöffnung eingesetzt werden.

Bevorzugt werden jedoch Dihydroxyfettsäuren, insbesondere aus Diolen eingesetzt. Sie sind bei Raumtemperatur flüssig und lassen sich leicht mit den übrigen Reaktionsteilnehmern mischen. Unter Dihydroxyfettsäuren werden im Sinne der Erfindung sowohl die Ringöffnungsprodukte epoxidierter ungesättigter Fettsäuren mit Wasser als auch die entsprechenden Ringöffnungsprodukte mit Diolen und deren Vernetzungsprodukten mit weiteren Epoxidmolekülen verstanden. Die Ringöffnungsprodukte mit Diolen können etwas genauer auch als Dihydroxyalkoxyfettsäuren bezeichnet werden. Dabei sind vorzugsweise die Hydroxygruppen bzw. die Hydroxyalkoxygruppe durch mindestens 1, vorzugsweise mindestens 3, insbesondere mindestens 6, $CH_2$-Einheiten von der Carboxygruppe getrennt.

Bevorzugte Dihydroxyfettsäuren sind:

9,10-Dihydroxypalmitinsäure, 9,10-Dihydroxystearinsäure und 13,14-Dihydroxybehensäure sowie deren 10,9- bzw. 14,13-Isomere.

Auch mehrfach ungesättigte Fettsäuren sind geeignet, z.B. Linolsäure, Linolensäure und Ricininsäure. Als konkretes Beispiel für eine aromatische Carbonsäure sei die Zimtsäure genannt. Die Treib-Reaktion, d. h. die $CO_2$-Bildung für die Aufschäumung kann sowohl durch die Reaktion von Isocyanatgruppen des Polyisocyanats mit Wasser als auch durch die Reaktion der Isocyanatgruppen mit den Carbonsäuregruppen der Carbonsäuren erfolgen.

Wenn die $CO_2$-Abspaltung aus der Isocyanat-Carbonsäure-Reaktion bereits bei Raumtemperatur starten soll, ist es zweckmäßig, Amino-substituierte Pyridine und/oder N-substituierte Imidazole als Katalysatoren zu verwenden. Besonders geeignet sind 1-Methylimidiazol, 2-Methyl-1-vinylimidazol, 1-Allylimidazol, 1-Phenylimidazol, 1,2,4,5-Tetramethylimidazol, 1(3-Aminopropyl)imidazol, Pyrimidazol, 4-Dimethylamino-pyridin, 4-Pyrrolidinopyridin, 4-Morpholinopyridin, 4-Methylpyridin und N-Dodecyl-2-Methyl-imidazol.

Die oben genannten Ausgangsstoffe für das PU-Bindemittel, nämlich Polyisocyanat, Polyol, Polyamin, Wasser, Carbonsäure und Katalysator werden in folgenden Mengenverhältnissen eingesetzt: Auf ein Äquivalent Isocyanat kommen 0,1 bis 1, vorzugsweise 0,8 bis 1 Äquivalente einer Mischung aus Polyol, Polyamin, Wasser und/oder Carbonsäure, wobei das Verhältnis Polyol und/oder Polyamin zu Wasser und/oder Carbonsäure 20 :1 bis 1 : 20 betragen kann. Die Menge an einzusetzenden Katalysatoren liegt zwischen 0,0001 und 1,0, vorzugsweise zwischen 0,01 und 0,5 äquivalenten Pyridin- oder Imidazolkatalysator. Wird dagegen nur Wasser zur Treibreaktion eingesetzt, kann auf die Zugabe der oben angegebenen Pyridine und Imidazole verzichtet werden. Ist jedoch Carbonsäure das alleinige Treibmittel, müssen diese Pyridine und/oder Imidazole in Kombination mit den später aufgeführten basischen oder metallorganischen Katalysatoren zur Reaktionsbeschleunigung eingesetzt werden. Setzt man Polycarbonsäuren oder Hydroxy- bzw. Aminocarbonsäuren ein, kann auf den Zusatz eines Polyols oder Polyamins ganz verzichtet werden. Für den Fall, daß kein Polyol, Polyamin oder Wasser an der Reaktion beteiligt ist, also die Isocyanate mit den Carbonsäuren umgesetzt werden, gilt die Regel: Auf ein Äquivalent Isocyanat kommen 0,1 bis 1, vorzugsweise 0,8 bis 1 äquivalente Carbonsäure und 0,0001 bis 1,0, vorzugsweise 0,001 bis 0,5 äquivalente Pyridinoder Imidazolkatalysator.

Für den Fall, daß die mehrwertigen Isocyanate überwiegend mit Hydroxycarbonsäuren umgesetzt werden, sollen die o.g. Amin-Katalysatoren vorzugsweise in einer Konzentration von 0,05 bis 15, insbesondere von 0,5 bis 10 Gew.-% eingesetzt werden, bezogen auf die Summe von Hydroxycarbonsäure und Isocyanat.

Neben den obengenannten Pyridin- und Imidazol-Derivaten können noch weitere Katalysatoren zugesetzt werden. Insbesondere für die Isocyanat/Polyol- und Isocyanat/Wasser-Reaktion können metallorganische Verbindungen wie Zinn(II)salze von Carbonsäuren, starke Basen wie Alkali-Hydroxide, -Alkoholate und -Phenolate, z.B. Zinn-II-acetat, -ethylhexoat und -diethylhexoat verwendet werden. Eine bevorzugte Verbindungsklasse stellen die Dialkyl-Zinn (IV)-Carboxylate dar. Die Carbonsäuren haben 2, vorzugsweise wenigstens 10, insbesondere 14 bis 32 C-Atome. Es können auch Dicarbonsäuren eingesetzt werden. Als Säuren seien ausdrücklich genannt: Adipinsäure, Maleinsäure, Fumarsäure, Malonsäure, Bernsteinsäure, Pimelinsäure, Terephthalsäure, Phenylessigsäure, Benzoesäure, Essigsäure, Propionsäure sowie insbesondere 2-Ethylhexan-, Capryl-, Caprin-, Laurin-, Myristin-, Palmitin- und Stearinsäure. Konkrete Verbindungen sind Dibutyl- und Dioctyl-zinndiacetat, -maleat, -bis-(2-ethylhexoat), -dilaurat, Tributylzinnacetat, Bis(β-methoxycarbonylethyl)zinndilaurat und Bis(β-acetyl-ethyl)zinndilaurat.

Auch Zinnoxide und -sulfide sowie -thiolate sind bevorzugt brauchbar. Konkrete Verbindungen sind: Bis(tributylzinn)oxid, Bis(trioctylzinn)oxid, Dibutyl- und Dioctylzinn-bis(2-ethyl-hexylthiolat) Dibutyl- und Dioctylzinndidodecylthiolat, Bis(β-methoxycarbonyl-ethyl)zinndidodecylthiolat, Bis(β-acetyl-ethyl)zinn-bis(2-ethylhexylthiolat), Dibutyl- und Dioctylzinndidodecylthiolat, Butyl- und Octylzinntris(thioglykolsäure-2-ethylhexoat), Dibutyl- und Dioctylzinn-bis(thioglykolsäure-2-ethylhexoat), Tributyl- und Trioctylzinn(thioglykolsäure-2-ethylhexoat) sowie Butyl- und Octylzinntris(thioethylenglykol-2-ethylhexoat), Dibutyl- und Dioctylzinnbis(thioethylenglykol-2-ethylhexoat), Tributyl- und Trioctylzinn(thioethylenglykol-2-ethylhexoat) mit der allgemeinen Formel $R_{n+1}Sn(SCH_2CH_2OCOC_8H_{17})_{3-n}$, wobei R eine Al-

kylgruppe mit 4 bis 8 C-Atomen ist, Bis(β-methoxycarbonylethyl)zinn-bis(thioethylenglykol-2-ethylhexoat), Bis(β-methoxycarbonyl-ethyl)-zinn-bis(thioglykolsäure-2-ethylhexoat), und Bis(β-acetyl-ethyl)zinn-bis(thioethylenglykol-2-ethylhexoat) und Bis(β-acetyl-ethyl)zinn-bis(thioglykolsäure-2-ethylhexoat.

Für die Vernetzung des Polyurethangerüstes kann auch die Trimerisierungsreaktion der Isocyanatgruppen mit sich selbst bzw. mit Urethan und Harnstoffgruppen zu Allophanat- bzw. Biuret-Gruppen erfolgen. Hierzu können Trimerisierungskatalysatoren verwendet werden. Als Trimerisierungs-Katalysator sei DABCO TMR-2 usw. der Fa. Air Products genannt, wobei es sich um in Ethylenglykol gelöste quaternäre Ammoniumsalze handelt.

Zusätzlich geeignet sind auch aliphatische tertiäre Amine insbesondere bei cyclischer Struktur. Unter den tertiären Aminen sind auch solche geeignet, die zusätzlich noch gegenüber den Isocyanaten reaktive Gruppen tragen, insbesondere Hydroxyl- und/oder Amino-Gruppen. Konkret genannt seien:

Dimethylmonoethanolamin, Diethylmonoethanolamin, Methylethylmonoethanolamin, Triethanolamin, Trimethanolamin, Tripropanolamin, Tributanolamin, Trihexanolamin, Tripentanolamin, Tricyclohexanolamin, Diethanolmethylamin, Diethanolethylamin, Diethanolpropylamin, Diethanolbutylamin, Diethanolpentylamin, Diethanohexylamin, Diethanolcyclohexylamin, Diethanolphenylamin sowie deren Ethoxylierungs- und Propoxylierungs-Produkte, Diaza-bicyclo-octan(Dabco), Triethylamin, Dimethylbenzylamin (Desmorapid DB, BAYER), Bisdimethylaminoethylether (Catalyst A I, UCC), Tetramethylguanidin, Bisdimethylaminomethyl-phenol, 2,2'-Dimorpholinodiethylether, 2-(2-Dimethylaminoethoxy)ethanol, 2-Dimethylaminoethyl-3-dimethylaminopropylether, Bis(2-dimethylaminoethyl)ether, N,N-Dimethylpiperazin, N-(2-hydroxyethoxyethyl)-2-azanorborane, Texacat DP-914 (Texaco Chemical), N,N,N,N-Tetramethylbutan-1,3-diamin, N,N,N,N-Tetramethylpropan-1,3-diamin und N,N,N,N-Tetramethylhexan-1,6-diamin.

Die Katalysatoren können auch in oligomerisierter oder polymerisierter Form vorliegen, z.B. als N-methyliertes Polyethylenimin.

Die Polyurethan-Bindemittel der erfindungsgemäß hergestellten Formkörper haben neben den Amidgruppen aufgrund der Carbonsäure/Isocyanat-Reaktion noch Urethan-Gruppen aus der Reaktion der Isocyanate mit den Polyolen und/oder Polyhydroxycarbonsäuren. Außerdem enthalten sie Harnstoff-Gruppen aus der Reaktion der Isocyanate mit dem gegebenenfalls vorhandenen Wasser, den Polyaminen oder Aminocarbonsäuren des Systems. Sie enthalten außerdem noch Ester-Gruppen bzw. Ether-Gruppen aus den eingesetzten Polyolen.

Die Menge der Reaktionspartner Polyisocyanat, Polyol, Polyamin, Carbonsäure und Wasser wird so gewählt, daß das Polyisocyanat im Überschuß eingesetzt wird. Das Äquivalentverhältnis von NCO- zur Summe aus OH-, NH- und COOH-Gruppen beträgt 5:1, vorzugsweise 2:1 bis 1,2:1, ganz besonders bevorzugt ist ein Isocyanat-Überschuß von 5 bis 50 %.

In einer bevorzugten Ausführungsform enthält die Zusammensetzung zur Herstellung der geschäumten Polyurethanschicht neben den vorgenannten Bindemittelbestandteilen einen hohen Anteil an Füllstoff. Als Füllstoff können dabei neben den in der Polyurethanchemie üblichen Füllstoffen wie Calciumcarbonat in Form der gefällten oder der gemahlenen Kreiden oder als Kalksteinmehl auch Dolomit (CaMg(CO$_3$)$_2$), Bariumsulfat (Schwerspat), Aluminiumoxid, Aluminiumoxidhydrat, auch Quarzsand, getrockneter Steinschleifschlamm, Holzspäne, Zellulosefasern, Schaumstoffabfälle, Gummimehl, Gummischnitzel, Schaumglasgranulat oder gemahlenes Glas eingesetzt werden. Der Füllstoffanteil kann dabei bis zu 80 Gew.% des Polyurethanbindemittels ausmachen. Bei hohen Wassergehalten der Füllstoffe kann es notwendig sein, diese in an sich bekannter Weise zu trocknen. Gegebenenfalls kann diese Füllstoffmischung mit geeignet gefärbten Steinschleifschlämmen eingefärbt werden, hierzu können schwarz-, rot- oder graugefärbte Quarzmehle oder Steinschleifschlämme eingesetzt werden. Gegebenenfalls können die Füllstoffe mit Haftvermittlern, insbesondere organofunktionellen Silanen oder Titanaten vor dem Zumischen oberflächenbehandelt werden, so daß sie besser eindispergiert werden und besser in die Polyurethanmatrix eingebunden werden.

Als mineralische Formkörper eignen sich Platten oder vorgeformte Halbzeuge aus den Ergußgesteinen Granit, Basalt, Sylenit, Diabas, Tuff, Liparit, Diorit, Andesit, Pikrit sowie Sandstein als Beispiel für ein Sedimentgestein oder Marmor als Beispiel für metamorphe Gesteine. Neben den vorgenannten mineralischen Formkörpern aus natürlichen Gesteinen können auch synthetische Steine auf Beton- bzw. Kunstharzbasis (Polyester) Verwendung finden. Die Dicke der verwendeten Steinplatte oder des Halbzeugs richtet sich dabei nach dem Einsatzzweck sowie der zu erwartenden Belastung, sie hat üblicherweise eine Dicke zwischen 8 und 20 mm, vorzugsweise zwischen 10 und 14 mm.

Um eine gute Haftung zwischen der Steinplatte und dem Schaumstoff zu erreichen, kann vor Einbringen des (füllstoffhaltigen) Schaumstoff-Reaktionsgemisches in die Form auf die Steinplatte ein Klebstoff aufgetragen werden. Dieser Klebstoff kann dabei jeder an sich bekannte Strukturklebstoff auf Basis von Polyurethanen oder Epoxiden sein, bevorzugt wird hierbei ein Polyurethanklebstoff, der im wesentlichen die Bestandteile des vorgenannten Bindemittelsystems enthält, wobei keine Treibmittel in der Klebstoff-Formulierung enthalten sind.

Zwischen Steinplatte und Polyurethanschaumstoff sowie auf der Rückseite der Polyurethanschaumstoffschicht (d. h. der der Steinplatte abgewandten Seite) kann eine Verstärkungsmatte bzw. ein Verstärkungsvlies eingebracht werden, um die Stabilität der Verbundplatte zu erhöhen. Diese Verstärkungsmatte kann dabei aus Glasfasergewebe, Glasfaservlies oder aus synthetischen oder natürlichen Fasermaterialien bestehen.

Ein besonders bevorzugter Füllstoff ist dabei Quarzsand, wobei dieser zum verbesserten Fließverhalten des Polyurethanreaktionsgemisches vor dem Aushärten eine definierte Korngrößenverteilung haben soll. Besonders bevorzugt sind dabei Füllstoffe mit einer Fullerverteilung, bei der die Körnungsmischung der folgenden mathematischen Formel

$$D= \sqrt{d/d_{max}} \cdot 100$$

folgt, wobei d die Maschenweite des Prüfsiebes in mm, $d_{max}$ der Durchmesser des Maximalkornes in mm und D der Siebdurchgang des Füllstoffes durch das Prüfsieb in % ist. Ein derartiges Korngemisch bewirkt bekanntlich theoretisch eine vollständige Raumerfüllung, d. h. einen Füllgrad von 100 %. Hierdurch ergibt sich ein optimales Fließverhalten sowie eine optimale Einbindung des Füllstoffes in die polymere Schaumstoffmatrix. Voraussetzungen für eine derartige theoretisch vollständige Raumerfüllung sind jedoch

- Verfügbarkeit aller Füllstoffe zwischen der Maschenweite 0 und der Maschenweite $d_{max}$ im errechneten Anteil und
- eine vollständige Mischgüte.

Beide Forderungen sind in der Praxis meist nicht zu erfüllen, daher verwendet man meistens Füllstoffzusammensetzungen, die eine "Ausfallkörnung" aufweisen. Diese Bezeichnung kommt daher, daß bei diesem Mischungstyp zwischen dem Grobkornbereich und dem Feinkornbereich eine Mischungslücke besteht. Derartige Füllstoffe mit Ausfallkörnungen sind ebenfalls bevorzugte Füllstoffgemische für die erfindungsgemäßen Verbundkörper. Ganz besonders bevorzugt sind dabei Quarzsandsorten wie sie unter der Bezeichnung F31, F32, F34, F36 von den Quarzwerken Frechen angeboten werden. Diese haben eine mittlere Korngröße von 0,33; 0,24; 0,20 bzw. 0,16 mm. Diese können dann gegebenenfalls mit feinkörnigen Quarzmehlen wie Millisil W12 (mittlere Korngröße 16 µm) oder Sikron SF (Quarzmehl, mittlere Korngröße 10 µm) abgemischt werden.

Zur besseren Einarbeitung der Füllstoffe enthalten die erfindungsgemäßen Zusammensetzungen in der Regel Netz- und Dispergiermittel. Diese verbessern das Einarbeiten der Füllstoffe sowie das Fließen der Polyurethanschaumstoff-Reaktionsgemische mit dem Quarzsand dem Steinschleifschlamm oder dem gemalenen Glas in die Randbereiche der auszugießenden Formen. Konkrete Beispiele für derartige Netz- und Dispergiermittel werden von der Firma Byk unter den Bezeichnungen BYK W 968, W 910, A 525 oder A 530 angeboten.

Es kann zweckmäßig sein, an sich bekannte Schaumstabilisatoren einzusetzen, z.B. auf der Basis von Siloxan-Oxyalkylencopolymerisaten wie sie z.B. unter dem Handelsnamen Tegostab von der Firma Goldschmidt vertrieben werden. Prinzipiell können aber auch andere, silikonfreie Stabilisatoren verwendet werden z.B. LK-221, LK-223 und LK-443 der Firma AirProducts oder auch Betainemulgatoren.

Falls einzelne Komponenten des Bindemittelsystems höhere Wassergehalte aufweisen, kann es sinnvoll sein, Trockenmittel in der Form von Molekularsieb-Pasten zu verwenden. Bei sehr hohen oder schwankenden Wassergehalten müssen diese Bestandteile ggf. vorher getrocknet werden.

Zum erleichterten Entformen der Formkörper nach deren Herstellung können an sich bekannte Trennmittel in der Metallform eingesetzt werden, beispielsweise Acmos-Trennmittel für PUR mit den Typenbezeichnungen 39-5001, 39-4487, 37-3200 und 36-3182. In vielen Fällen kann es jedoch auch genügen, die Metallform mit einer Schicht an fluorierten Polymeren als Trennmittel zu versehen (Teflon®-Schicht).

Die nach dem erfindungsgemäßen Verfahren hergestellten Verbundkörper aus mineralischen Formkörpern und geschäumten Polyurethanschichten eignen sich wie eingangs erwähnt für eine Vielzahl von Raumausstattungsgegenständen. Konkret genannt seinen hier Tischplatten, Arbeitsplatten für Küchenmöbel, Fußbodenplatten für Gebäude - ggf. mit entsprechender Formgebung in der Schaumstoffschicht für Fußbodenheizungsrohre - , Terassenplatten, Fensterbänke, Platten für die Verkleidung von Gebäuden - ggf. unter Einbindung von Befestigungselementen oder Gehwegplatten.

Die Erfindung wird im folgenden durch Ausführungsbeispiele näher erläutert.

**Beispiel 1**

| a) Polyolkomponente | Massenanteile in % |
|---|---|
| Rizinusöl | 86,2 |
| Glycerin | 9,2 |
| Wasser | 2,3 |
| Tegostab B 8404 | 1,8 |
| 1,4-Diazabicyclo[2.2.2]octan | 0,5 |
| | |
| **b) Isocyanatkomponente** | |
| Diphenylmethan-4,4'-diisocyanat (Roh-MDI) | 109 |

Die Polyolkomponente und Quarzsand F31 (Quarzwerke Frechen) werden im Mischungsverhältnis 100:185 vermischt. Diesem Gemisch wird das Isocyanat zugesetzt, und es wird erneut homogenisiert. Das Verhältnis Polyol zu Isocyanat liegt bei 100:109. Dieses Gemisch wird in eine mit Trennmittel imprägnierte Metallform gegeben, die mit einem Deckel verschließbar ist. Auf dem Boden dieser Form befindet sich eine 1 cm dicke Marmorplatte. Nach dem Einbringen des Reaktionsgemisches wird dies in der Form gleichmäßig verteilt und ein Glasfasergewebe aufgelegt. Nach 30 bis 45 min kann eine Steinverbundplatte aus der hierzu geöffneten Form entnommen werden.

**Beispiel 2**

| a) Polyolkomponente | Masseanteile in % |
|---|---|
| Dipropylenglykol | 22,00 |
| Glyzerin | 7,00 |
| Polypropylenglykol, Mn 400 | 58,22 |
| Rapsfettsäure | 10,00 |
| Wasser | 1,30 |
| Tegostab B 8404 | 1,00 |
| N-Methylimidazol | 0,40 |
| Dibutylzinndilaurat | 0,08 |
| | |
| **Isocyanatkomponente** | |
| Diphenylmethan-4,4'-diisocyanat (Roh-MDI) | 150 |

Die Polyolkomponente und Quarzsand F31 (Quarzwerke Frechen) werden im Mischungsverhältnis 100:185 vermischt. Diesem Gemisch wird das Isocyanat zugesetzt, und es wird erneut homogenisiert. Das Verhältnis Polyol zu Isocyanat liegt bei 100:150. Dieses Gemisch wird in eine mit Trennmittel imprägnierte Metallform gegeben, die mit einem Deckel verschließbar ist. Auf dem Boden dieser Form befindet sich eine 1 cm dicke Marmorplatte. Nach dem Einbringen des Reaktionsgemisches wird dies in der Form gleichmäßig verteilt und ein Glasfasergewebe aufgelegt. Nach 30 bis 45 min kann eine Steinverbundplatte aus der hierzu geöffneten Form entnommen werden.

**Patentansprüche**

1. Verfahren zum Herstellen von Verbundkörpern aus mineralischen Formkörpern und geschäumten Polyurethanschichten, **dadurch gekennzeichnet, daß**

   • der mineralische Formkörper in einer geschlossenen Form mit einer schäumfähigen Polyurethanzusammensetzung , deren Bindemittel aus Polyisocyanaten, Polyolen, Katalysatoren, 0,1 bis 5 Gew. % Wasser (bezogen auf das Bindemittel) sowie gegebenenfalls Carbonsäure und Netz- und Dispergiermittel besteht, beschichtet wird

- wobei die Form nicht vorgeheizt wird und
- die Zusammensetzung nur dem beim Schaumprozeß des Polyurethangemisches entstehenden Eigendruck ausgesetzt wird.

2. Verfahren nach Anspruch 1, **dadurch gekennzeichnet, daß** auf den mineralischen Formkörper vor Einbringen der schaumfähigen Polyurethan-Zusammensetzung eine Klebstoffschicht aufgebracht wird.

3. Verfahren nach Anspruch 2, **dadurch gekennzeichnet, daß** vor dem Aufbringen der Schaumzusammensetzung auf die Klebstoffschicht eine Verstärkungsmatte oder ein Verstärkungsvlies aufgebracht wird.

4. Verfahren nach Anspruch 2 oder 3, **dadurch gekennzeichnet, daß** der Schaumstoff in einem separaten Arbeitsgang hergestellt und geformt wird und anschließend mit Hilfe eines Polyurethan-Klebstoffs gegebenenfalls unter Einbringung einer Verstärkungsmatte oder eines Verstärkungsvlieses mit dem mineralischen Formkörper verbunden wird.

5. Verfahren nach mindestens einem der vorhergehenden Ansprüche, **dadurch gekennzeichnet, daß** die der mineralischen Schicht abgewandte Seite des Schaumkörpers mit einer Verstärkungsmatte oder einem Verstärkungsvlies versehen wird.

6. Verfahren nach mindestens einem der vorhergehenden Ansprüche, **dadurch gekennzeichnet, daß** als Schaumstoff-Zusammensetzung ein gefülltes Polyurethan-Bindemittel verwendet wird, wobei die Füllstoffe ausgewählt werden aus Calciumcarbonat in Form von Kreiden oder Kalksteinmehl, Calciummagnesiumcarbonat, Bariumsulfat, Aluminiumoxid, Aluminiumoxidhydrat, Quarzsand, getrocknetem Steinschleifschlamm, gemahlenem Glas, Schaumglasgranulat, Holzspäne, Holzmehl, Cellulosefasern, Schaumstoffabfällen, Gummimehl oder Gummischnitzeln oder Mischungen davon.

7. Verfahren nach Anspruch 6, **dadurch gekennzeichnet, daß** die Teilchengrößenverteitung der Füllstoffe einer Fullerverteilung oder einer Ausfallkörnung entspricht.

8. Verbundformkörper hergestellt nach einem Verfahren gemäß Anspruch 1 bis 7.

9. Verwendung der Verbundkörper gemäß Anspruch 8 als Tischplatten, Arbeitsplatten für Küchenmöbel, Fußbodenplatten für Gebäude (ggf. mit Formgebung in der Schaumstoffschicht für Fußbodenheizungsrohre), Terassenplatten, Fensterbänke, Platten für die Verkleidung von Gebäuden oder Gehwegplatten.

**Claims**

1. A process for the production of composites of mineral shaped bodies and foamed polyurethane layers, **characterized in that**

- the mineral shaped body is coated in a closed mould with a foamable polyurethane composition of which the binder consists of polyisocyanates, polyols, catalysts, 0.1 to 5% by weight water (based on the binder) and optionally carboxylic acid and wetting agents and dispersants,
- the mould not being preheated, and
- the composition is only exposed to the pressure spontaneously generated during foaming of the polyurethane mixture.

2. A process as claimed in claim 1, **characterized in that** a layer of adhesive is applied to the mineral shaped body before the foamable polyurethane composition is introduced.

3. A process as claimed in claim 2, **characterized in that** a reinforcing mat or a reinforcing nonwoven is applied to the adhesive layer before the foam composition is applied.

4. A process as claimed in claim 2 or 3, **characterized in that** the foam is produced and moulded in a separate process step and is then bonded to the mineral shaped body with a polyurethane adhesive, optionally with insertion of a reinforcing mat or a reinforcing nonwoven.

5. A process as claimed in at least one of the preceding claims, **characterized in that** the side of the foam layer remote from the mineral layer is provided with a reinforcing mat or a reinforcing nonwoven.

6. A process as claimed in at least one of the preceding claims, **characterized in that** a filled polyurethane binder is used as the foam composition, the fillers being selected from calcium carbonate in the form of chalks or limestone powder, calcium magnesium carbonate, barium sulfate, aluminium oxide, hydrated aluminium oxide, silica sand, dried stone grinding sludge, ground glass, foam glass granules, wood chips, wood flour, cellulose fibres, foam waste, rubber powder or rubber chips or mixtures thereof.

7. A process as claimed in claim 6, **characterized in that** the particle size distribution of the fillers corresponds to a Fuller distribution or gap grading type particle mixture.

8. Composites produced by the process claimed in claims 1 to 7.

9. The use of the composites claimed in claim 8 as table tops, working surfaces for kitchen furniture, floor panels for buildings (optionally shaped in the foam layer to accommodate floor heating pipes), terrace tiles, window sills, panels for facing buildings or walkway panels.


**Revendications**

1. Procédé de préparation de corps composites à partir de corps moulés en matière minérale et de couches en polyuréthane expansé, **caractérisé en ce que**

   • le corps moulé en matière minérale est revêtu, dans un moule fermé, avec une composition à base de polyuréthane expansible dont le liant est constitué par des polyisocyanates, des polyols, des catalyseurs, 0,1 à 5 % en poids d'eau (par rapport au liant) ainsi qu'éventuellement des acides carboxyliques et des agents mouillants et dispersants,
   • le moule n'étant pas préchauffé, et
   • la composition n'étant soumise qu'à la pression formée lors du processus d'expansion du mélange à base de polyuréthane.

2. Procédé selon la revendication 1, **caractérisé en ce que**, avant l'application de la composition à base de polyuréthane expansible, le corps moulé en matière minérale est revêtu avec une couche d'adhésif.

3. Procédé selon la revendication 2, **caractérisé en ce que**, avant l'application de la composition expansible sur la couche d'adhésif, on y applique une natte renforçatrice ou un feutre renforçateur.

4. Procédé selon la revendication 2 ou 3, **caractérisé en ce que** la matière expansée est préparée et moulée dans une étape séparée et ensuite, elle est assemblée avec le corps moulé en matière minérale à l'aide d'un adhésif en polyuréthane, éventuellement avec application d'une natte renforçatrice ou d'un feutre renforçateur.

5. Procédé selon au moins l'une des revendications précédentes, **caractérisé en ce que** la face de la couche expansée opposée au corps en matière minérale est munie d'une natte renforçatrice ou d'un feutre renforçateur.

6. Procédé selon au moins l'une des revendications précédentes, **caractérisé en ce que** comme composition expansée, on utilise un liant à base de polyuréthane chargé, les charges étant choisies parmi la poudre de craie ou de roche calcaire, le carbonate de calcium et de magnésium, le sulfate de baryum, l'oxyde d'aluminium, l'oxyde d'aluminium hydraté, le sable quartzeux, les fines séchées provenant du polissage de pierres, du verre broyé, du granulé de verre expansé, des copeaux de bois, de la sciure de bois, des fibres cellulosiques, des rognures de mousse, de la poudre de caoutchouc ou des rognures de caoutchouc ou des mélanges de ces matières.

7. Procédé selon la revendication 6, **caractérisé en ce que** la distribution de la taille des particules dans les charges correspond à une répartition de filler ou à une granulométrie d'exclusion.

8. Corps moulé composite préparé par un procédé selon l'une quelconque des revendications 1 à 7.

9. Utilisation du corps composite selon la revendication 8 comme plateau de table, plan de travail pour mobilier de cuisine, dalles de revêtement de sol (avec éventuellement des évidements réservés dans la couche de mousse pour des tuyaux de chauffage par le sol), dalles pour terrasses, rebords de fenêtres, plaques destinées au revêtement de constructions ou dalles de trottoir.